Europäisches Patentamt

(19) European Patent Office

Office européen des brevets

(11) Publication number: **0 108 306**
A1

## (12) EUROPEAN PATENT APPLICATION

(21) Application number: 83110464.1

(22) Date of filing: 20.10.83

(51) Int. Cl.³: **F 25 D 31/00**
F 25 B 21/02, A 47 J 36/26

(30) Priority: 29.10.82 DE 3240157

(43) Date of publication of application:
16.05.84 Bulletin 84/20

(84) Designated Contracting States:
AT BE CH DE FR GB IT LI LU NL SE

(71) Applicant: Hitzig, Hermann
Oeltingsallee 49
D-2080 Pinneberg(DE)

(72) Inventor: Hitzig, Hermann
Oeltingsallee 49
D-2080 Pinneberg(DE)

(74) Representative: Glaeser, Joachim, Dipl.-Ing. et al,
Patentanwaltsbüro
Wiegand-Niemann-Kohler-Gernhardt-Glaeser
Königstrasse 28
D-2000 Hamburg 50(DE)

(54) Temperature conditioning apparatus for cooling or heating liquids held in receptacles.

(57) Temperature conditioning apparatus for cooling or heating liquids and the like held in receptacles, particularly for cooling beverages in cans, comprising at least one recess formed in a heat-conducting part and designed to snugly receive the receptacle, at least one electrically supplied heat-producing/refrigerating unit which is connected in heat-transfer relationship with the heat-conducting part and with cooling vanes. The heat-conducting part (11) is formed with small wall thickness, dimension or thickness of material in the region of the recesses (20, 21) and with increasing thickness of material or increasing heat flow cross-section in the direction to the area (25) of heat transfer to the heat-producing/refrigerating unit (12), with the heat-producing/refrigerating unit (12) being disposed in the lower region of the heat-conducting part (11) and below the recesses (20 and 21), particularly between said recesses.

./...

Fig. 1

# TEMPERATURE CONDITIONING APPARATUS FOR COOLING OR HEATING LIQUIDS HELD IN RECEPTACLES

## TECHNICAL FIELD

This invention relates to a temperature conditioning apparatus for cooling or heating liquids and the like, held in receptacles, such as, for example, beverages in cans. More particularly, the invention relates to temperature conditioning apparatus for cooling or heating liquids, comprising at least one recess formed in a heat-conducting part and designed to snugly receive the receptacle, at least one electrically supplied heat-producing/refrigerating or cooling element which is connected in heat-transfer relationship with the heat-conducting part and with cooling vanes.

## BACKGROUND ART

Previous devices of a similar kind include, e.g., a small electric refrigerator provided with two cuplike cylindrical holders into which the cans to be cooled can be inserted. A Peltier element is located at the side and in the area between the two cylinders, which element is connected by one of its active surfaces to a heat-transfer block which in turn is in contact with the cylinders. The other active surface of the Peltier element is provided with a cooling vane, which, in order to maximize its surface area, partly surrounds the two cylinders. Furthermore, there is provided a blower which directs cooling air along the cooling vanes.

In practice, no such refrigerator-like device has proved to be successful. The particular one described above can even be said to be wholly inoperative. Even under favorable ambient conditions it is not possible to cool a can filled, e.g., with beer, to an acceptable temperature level within a reasonable

DISCLOSURE OF INVENTION

The object of the present invention is to design a temperature conditioning apparatus of the general type described above such that liquids held in receptacles can be cooled within an acceptable time and also under extremely unfavorable ambient conditions. For example, a beer can shall be cooled to a temperature of the order of 8° C (approx. 46° F) within half an hour after the temperature conditioning apparatus is connected to an automobile battery. Also, it shall be possible to achieve the same cooling effect within approximately one hour even if, for example, there are ambient temperatures in the automobile of over 30° C (86 ° F).

This is achieved by a temperature conditioning apparatus according to the instant disclosure.

To carry out the objects of the present invention, it is essential to realize that for the temperature conditioning of liquids held in receptacles it is necessary to provide the kind of open heat flow circulation path which has flow cross-sections of increasing diameter as they approach the heating/refrigerating element. From there, the heat circulation is directed in a corresponding manner into and over the cooling vanes which in turn may taper off towards their free ends. Correspondingly, according to the invention, the cross-sections of the heat-conducting part normal to the expected heat flow are so designed that the recesses for receiving the receptacles are thin at their upper ends and of relatively large mass in the region near the heating/refrigerating unit, thus ensuring optimum heat transport. A possible candidate for the type of heating/refrigerating unit needed in this connection is a thermoelectric module which is supplied with electric energy and which has an elevated temperature at one of its active faces and a lower temperature at the other one, thus transporting heat from one face to the other face. For the purposes of this application, the term "heat transport" is used to emphasize the fact that certain quantities of thermal energy are transferred from a relatively low temperature surface to a relatively high temperature surface from where they can be dissipated by means of a blower to the ambient atmosphere. "Temperature conditioning" for the purposes of the present application shall mean that by the aid of the thermoelectric module a container holding liquids is either heated or cooled, depending on the switching mode.

For carrying out the present invention, it is essential that the heating/refrigerating unit be located below the recesses for the receptacles and above the cooling means. Therefore, in principle, the active surfaces of the Peltier element are substantially horizontally oriented. In previously known devices of the small refrigerator-type, the Peltier element is not located below the recesses but, on the contrary, is located above, or laterally of, the recesses, which undoubtedly contributes to poor heat transport.

Another important feature of the present invention lies in the fact that the recesses are provided at their bottom with a domelike bulge, so that, e.g., a customarily available beverage can having a corresponding circular indentation within their bottom surface can be brought into mating contact with the bottom of the recess. According to a preferred embodiment of the invention, however, the domelike bulge surface is provided with a substantially flat, non-curved area in its center. This means that for a can having a domed bottom the heat transfer will be somewhat less effective but it provides the advantage that the temperature conditioning apparatus according to the invention can also be used in connection with receptacles having flat bottoms, such that an adequate heat transfer area is provided in such instances as well, rather than more point-like heat transfer contact.

A particularly important feature of the present invention is the formation of the heat-conducting part in one piece, the material best suited for this part preferably being seawater resistant die-casting aluminium.

## BRIEF DESCRIPTION OF THE DRAWINGS

In the following, the invention will be described by way of example by reference to the accompanying drawings, in which

Fig. 1    is a view representing a cross-section through the temperature-conditioning apparatus according to the invention in which the heat-conducting part is shown uncut;

Fig. 2    is a plan view of the temperature conditioning apparatus illustrated in Fig. 1;

Fig. 3    is a side view of the heat-conducting part;

Fig. 4    is a section through the heat-conducting part according to A-B in Fig. 3.

## BEST MODE OF CARRYING OUT THE INVENTION

The temperature conditioning apparatus according to the invention comprises a casing 10 having substantially the form of a rectangular parallelepipedon wherein two apertures are provided in the upper one of the smaller surfaces and recesses 20 and 21 extend inwardly from said apertures. The recesses 20 and 21 are substantially cylindrical and are dimensioned to be only slightly larger than the usual commercially available beer cans. Recesses 20 and 21 are formed in a heat-conducting part 11 which is surrounded on both sides by insulating foam elements 16 and 17 inside of casing 10.

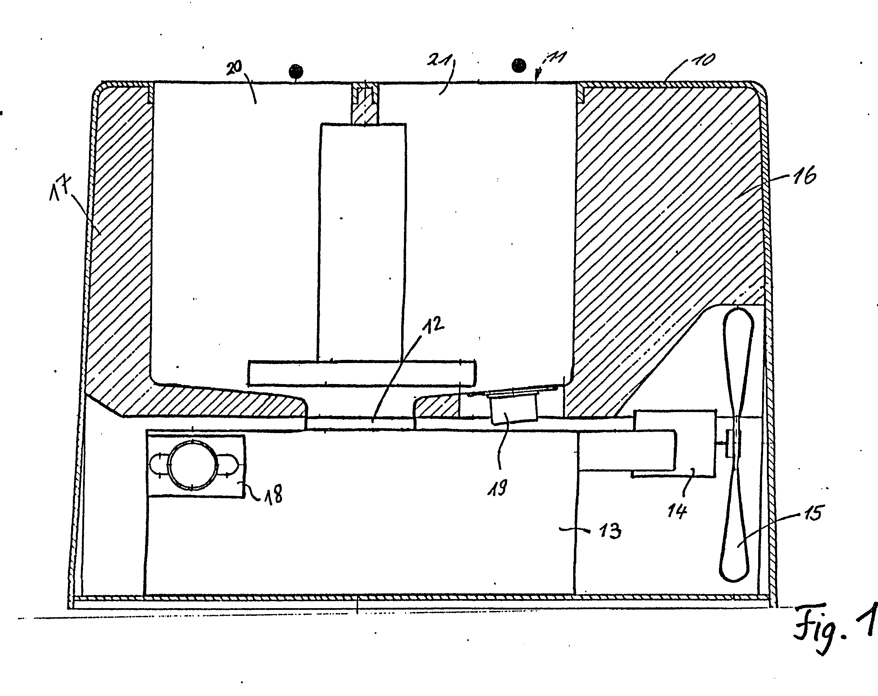

The heat-conducting part 11 has in its lower region a heat transfer area or surface 25 on which a Peltier element 12 (Fig. 1) is secured. Cooling means 13 are provided at the lower surface of the Peltier element 12, and said cooling means may be in the form of a flat bottom-like part arranged horizontally below the Peltier element 12 and formed with a plurality of vertically downwardly projecting cooling ribs or vanes. Located laterally of those cooling ribs is a motor 14 with a propeller 15 which, by means of the rotation of the motor, respectively the propeller, causes air to be aspired from the right through an aperture (not shown) in the casing 10 and to be conducted over the vanes of cooling means 13. The air stream exits the cooling vanes towards the left as seen in Fig. 1 and passes out of the casing 10 through apertures which are not shown.

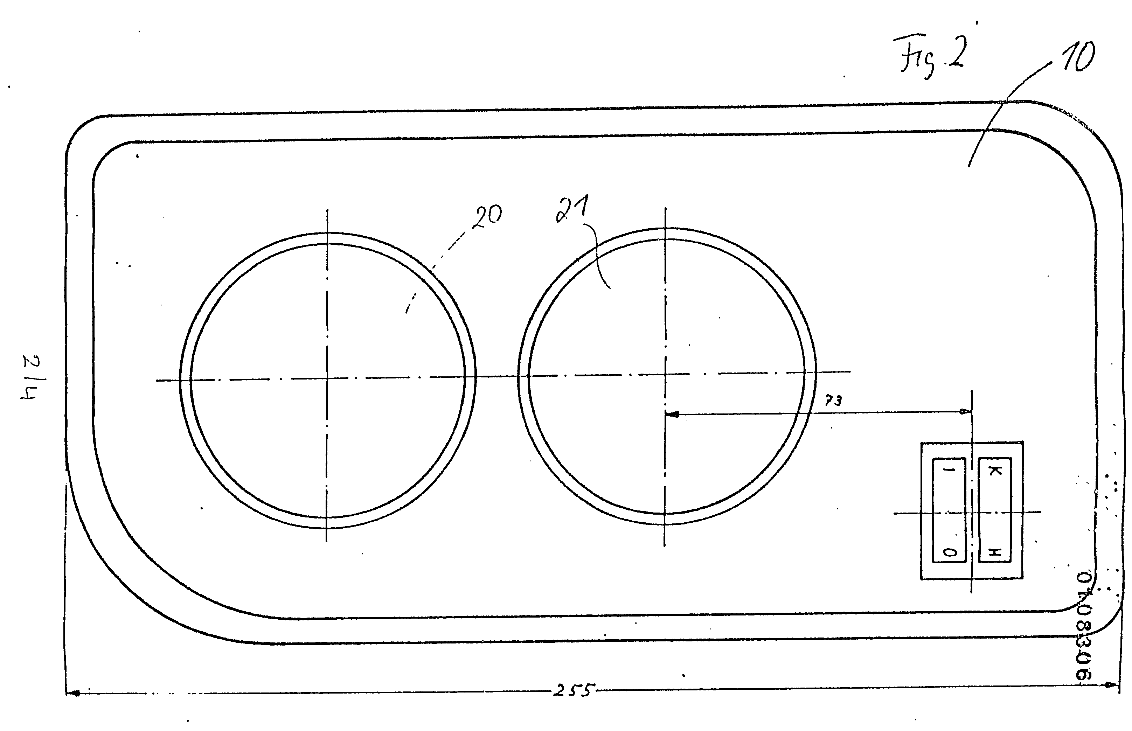

The connection between the Peltier element 12 and the heat-conducting part 11 and the cooling ribs or vanes 13 is effected in the usual manner so as to permit optimal heat transfer between the Peltier element 12 and its adjoining elements. Not shown here is the connection to an electric power source for the Peltier element 12; however, in the upper right hand corner of Fig. 2, a pair of switches is shown which serve, on the one hand, to switch on the current supply to the Peltier element and, on the other hand, to reverse the polarity of Peltier element 12, so that the upper surface of the Peltier element 12 assumes a low temperature for refrigerating and an elevated temperature for heating.

The temperature conditioning process is controlled through two temperature sensing elements 18 and 19. Temperature sensing element 18 is located on the cooling ribs 13 while temperature sensing element 19 is secured in the lower, bottom portion of the heat-conducting part 11. If, for example, a cooling or refrigerating operation is initiated and it is not possible to carry off sufficient heat away from the cooling ribs 13 by means of the blower, a certain temperature level is exceeded, which will be indicated by temperature sensor 18. The temperature sensor 18 then ensures that Peltier element 12 will receive no more electric current, so that the cooling ribs 13 can be further cooled by means of the blower 15. Thus a typical protective device for the Peltier element 12 is created.

The temperature sensor 19 serves to adjust the desired temperature at the heat-conducting part 11 or at the receptacle which is to be temperature conditioned.

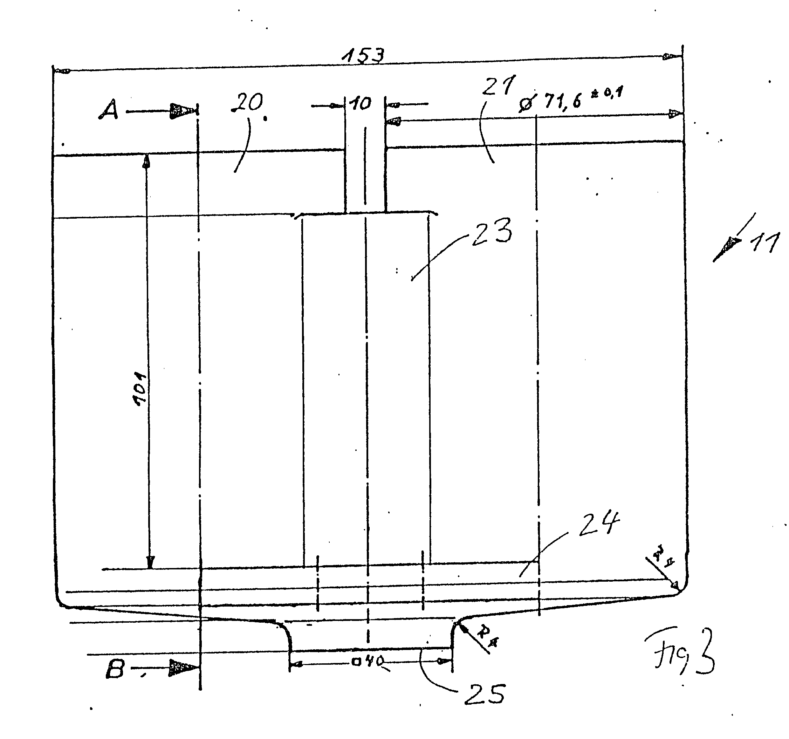

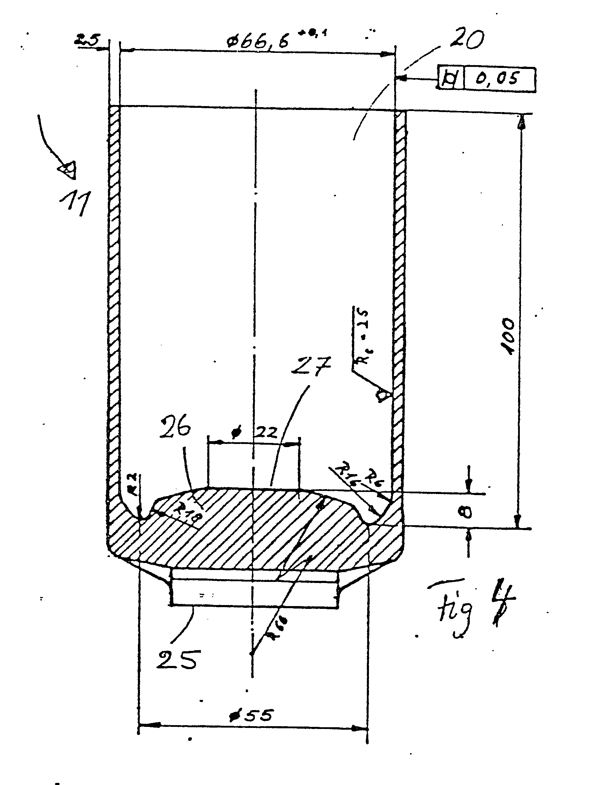

In Figs. 3 and 4 the specific design of the heat-conduction part 11 is shown. Thus, it can be seen that the wall thickness available in the upper region of the recess 20 is comparatively small; it increases towards the lower or bottom region. Likewise, it can be seen from Fig. 3 that there is a corelike part 23 terminating in a platelike part 24 in the lower region. Located below said platelike part 24 is the already mentioned heat transfer area 25 which is connected to the Peltier element 12. The corelike part 23 does not extend over the entire height of the recesses 20 and 21 but the top surface of the corelike part is recessed relative to the upper limit of the openings or recesses 20 and 21. It can be seen that the heat transfer cross-sections gradually increase from the top to the bottom and terminate in cross-sectional area 25.

Moreover, in Fig. 4, a peculiarity of the present invention can be seen, namely the configuration of the bottom portion of recess 20. This comprises a circular depression which terminates in a central domeshaped portion. This contour largely corresponds to the configuration of the bottom of a commercially available beer can, but with the exception that a flat area 27 is provided in the central region to permit surface contact for a can not having a domed bottom.

According to an essential feature of the invention the inner wall surfaces of the recesses 20 and 21 may be blackened by eloxation so as to establish a still better heat transfer relationship to the can disposed in the interior of the recess 20 or 21 which is to be refrigerated.

It is also within the scope of the present invention to arrange two thermocouples in the lower region between the two recesses and to install part of the refrigerating means and the blower between these two thermocouples. With such an arrangement, the two recesses may serve for refrigerating two receptacles. It is also feasible to refrigerate one receptacle and to heat another receptacle. Likewise, it is possible to heat two cans at the same time. This is substantially dependent on the switching circuits of the two Peltier elements.

Furthermore, it is within the scope of the present invention to provide a kind of adapter which can be inserted into the interior of recess 20 or 21. At the outer surface thereof, good heat transfer takes place between the inner surface of the recess and the opening of the adapter, the opening or interior cavity of the adapter being especially adapted to receive a receptacle of different configuration. Thus, by means of such an adapter, the temperature conditioning apparatus can be fitted for use also with receptacles for which the recesses themselves are not suitable. As a material for the adapter, either aluminium or a plastic material of good conductivity may be used, so that a suitably good heat flow transfer is ensured. It is, furthermore, possible to make the adapter itself from a pliable material or to form the adapter to be pliable, so that surface pressure can be exerted from the adapter on to the recess and also on the enclosed object.

CLAIMS

1.    Temperature conditioning apparatus for cooling or heating liquids and the like held in receptacles, particularly for cooling beverages in cans, comprising:

a heat-conducting part having at least one recess formed within it, said recess being shaped to snugly receive the receptacle; and

at least one electrically powered heat producing/refrigerating unit connected in a heat transfer relationship with said heat-conducting part, said heat-conducting part being formed with small wall thickness, dimension or thickness of material in the region of said recess and having increasing thickness of material or increasing heat flow cross-section in the direction of a heat transfer area near the heat producing/refrigerating unit, said heat transfer area between said heat-conducting part and said heat producing/refrigerating unit being located in the lower region of said heat-conducting part and below and between said recesses.

2.    Temperature conditioning apparatus according to claim 1, wherein said heat-conducting part is provided with a domeshaped bulge within the bottom surface of said recess.

3.    Temperature conditioning apparatus according to claim 2, wherein said bulge is formed with a flat area in the central portion.

4.    Temperature conditioning apparatus according to claims 1, 2 or 3, wherein said heat-conducting part is provided with a corelike portion between adjacent recesses.

5.    Temperature conditioning apparatus according to claim 4, wherein said heat-conducting part is made of one piece of die-cast material, preferably of corrosion-resistance aluminium or aluminium alloy.

- 8 -

6. Temperature conditioning apparatus according to claim 5, wherein said heat-producing/refrigerating unit consists of a thermoelectric module or Peltier element the upper surface of which is connected in a heat transfer relationship with said heat-conducting part and the lower surface of which is connected in a heat transfer relationship with an array of cooling ribs or vanes of heat-conducting material.

Fig. 1

Fig. 2

0108306

214

255

Fig 3

0108306

Fig 4

European Patent
Office

Application number

EP 83 11 0464

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 314 242 (LEFFERTS) <br> * Column 2, line 6 - column 3, line 71; figures 1-4 * | 1 | F 25 D 31/00 <br> F 25 B 21/02 <br> A 47 J 36/26 |
| A | | 5,6 | |
| Y | DE-B-1 113 222 (GENERAL ELECTRIC) <br> * Column 1, lines 38-52; column 3, lines 15-63; figures 1,5,7 * | 1 | |
| A | | 5,6 | |
| A | US-A-3 310 953 (RAIT) <br><br> * Column 1, line 60 - column 2, line 47; column 3, lines 3-59; figures 1-4 * | 1-3,5, 6 | TECHNICAL FIELDS SEARCHED (Int. Cl. ³) |
| A | US-A-4 311 017 (REED) <br> * Column 3, line 1 - column 5, line 10; figures 1-3 * | 1,4-6 | F 25 B <br> F 25 D <br> A 47 J <br> A 47 G |
| A | DE-A-2 415 085 (SACHS SYSTEMTECHNIK) <br> * Page 9, paragraph 3 - page 11, paragraph 2; figures 1-3 * | 1,5,6 | |

--- -/-

The present search report has been drawn up for all claims

| Place of search <br> THE HAGUE | Date of completion of the search <br> 27-01-1984 | Examiner <br> BOETS A.F.J. |
|---|---|---|

European Patent
Office

**EUROPEAN SEARCH REPORT**

Application number

EP  83 11 0464

| | DOCUMENTS CONSIDERED TO BE RELEVANT | | Page  2 |
|---|---|---|---|
| Category | Citation of document with indication, where appropriate, of relevant passages | Relevant to claim | CLASSIFICATION OF THE APPLICATION (Int. Cl. 3) |
| A | US-A-3 896 973  (MORGAN)<br>* Column  2, line 46 - column 3, line  2;  column  3, lines 47-66; figures 1-3 * | 2,3 | |
| A | DE-A-3 019 092  (WEIGL) | | |
| A | GB-A-  844 652  (GENERAL ELECTRIC) | | |
| A | DE-A-1 426 963  (VEREINIGTE FLUGTECHNISCHE WERKE) | | |
| A | DE-B-1 250 457  (BORG-WARNER) | | TECHNICAL FIELDS SEARCHED (Int. Cl. 3) |
| A | US-A-2 922 284  (DANIELSON) | | |

The present search report has been drawn up for all claims

| Place of search | Date of completion of the search | Examiner |
|---|---|---|
| THE HAGUE | 27-01-1984 | BOETS A.F.J. |